# FASCICULE DE BREVET EUROPEEN

(11) **EP 2 424 751 B1**
(45) Date de publication et mention de la délivrance du brevet: **19.03.2014**
(21) Numéro de dépôt: 10727047.2
(22) Date de dépôt: 27.04.2010
(51) Int. Cl.: B60R 21/232, B60R 21/20, B60R 21/00, B60R 21/231

(54) **CAISSON DE HAYON ET HAYON DE VEHICULE MUNI D'ELEMENTS DE SECURITE**
HEKKLAPPERAUM UND EINE HECKKLAPPE MIT SICHERHEITSANORDNUNGEN
HATCH BACK SPACE AND A VEHICLE HATCH BACK PROVIDED WITH SECURITY DEVICES

(30) Priorité: 29.04.2009 FR 0952839
(43) Date de publication de la demande: 07.03.2012
(73) Titulaire: Compagnie Plastic Omnium, 69007 Lyon (FR)
(72) Inventeur: AMORIN, Guilherme, F-01150 Chazey Sur Ain (FR); FAYT, Arnold, F-01640 Jujurieux (FR); CHERON, Hugues, F-01800 Meximieux (FR)
(74) Mandataire: Thiollier, Clémence-Olivia Laure Marie
(86) Numéro de dépôt international: PCT/FR2010/050799
(87) Numéro de publication internationale: WO 2010/125299

(56) Documents cités:
- EP-A- 1 634 778
- WO-A-98/24661
- DE-A1- 10 354 199
- DE-A1- 19 533 375

## Description

La présente invention concerne la sécurité des passagers arrières d'un véhicule.

On connaît dans l'état de la technique des coussins gonflables de sécurité (appelés plus communément airbags) qui sont destinés aux passagers arrières du véhicule et se déclenchent en cas de choc arrière.

De tels coussins gonflables de sécurité sont notamment prévus dans des véhicules de type citadin, de petites dimensions. Ils sont agencés dans le toit du véhicule, entre la caisse, notamment le pavillon de toit, et un panneau d'habillage intérieur de la caisse.

Le déploiement d'un tel coussin est déclenché en cas de choc arrière, c'est à dire un choc ayant tendance à propulser le véhicule vers l'avant, et permet de protéger la tête des passagers arrières. Il s'effectue à l'aide d'un système de mise à feu déclenchant la propulsion du coussin à une vitesse environ égale à 300 km/h en direction des occupants du véhicule.

Du fait de ce déploiement relativement violent, suite à un accident et à un déclenchement du système de sécurité, le pavillon de toit peut être endommagé et présenter une bosse associée à une déformation d'au moins une partie de la caisse du véhicule. Or, lorsque la caisse est touchée, la réparation du véhicule peut être relativement coûteuse. DE19533375 A1 décrit un caisson de hayon de véhicule selon le préambule de la révendication 1.

La présente invention vise notamment à remédier à cet inconvénient en proposant un système de sécurité permettant d'assurer la sécurité des passagers arrières du véhicule en cas de choc arrière tout en limitant l'endommagement du véhicule.

A cet effet, l'invention a pour objet un caisson de hayon de véhicule, appelé également panneau intérieur, comprenant une paroi ayant une surface interne prévue pour être tournée vers l'intérieur du véhicule lorsque le caisson est monté sur le véhicule, un logement dimensionné pour accueillir un coussin gonflable de sécurité étant ménagé dans le caisson, le logement étant délimité par la surface interne du caisson.

Ainsi, le caisson de hayon peut accueillir un coussin gonflable de sécurité pour protéger les passagers arrières en cas de choc. En effet, dans les véhicules de type citadin, le hayon est situé très près des sièges arrières du véhicule et un coussin gonflable de sécurité placé dans le hayon est de ce fait apte à protéger efficacement la tête des passagers arrières, en s'intercalant entre la tête et la vitre arrière.

En outre, lorsque le coussin gonflable de sécurité est situé dans le hayon, son déploiement peut entraîner une déformation du caisson de hayon mais pas de la caisse du véhicule, ce qui diminue les coûts de la réparation, car la réparation du hayon est généralement plus simple que celle de la caisse. De plus, le coussin gonflable de sécurité est destiné à se déclencher en réponse à un choc arrière. Le caisson de hayon étant généralement directement exposé à un tel choc, le déploiement du coussin gonflable de sécurité ne fait qu'éventuellement augmenter les dégâts infligés à une pièce déjà endommagée par le choc et qu'il aurait de toute façon fallu changer. Le déploiement du coussin gonflable de sécurité agencé dans le hayon du véhicule est donc susceptible de n'engendrer aucun coût supplémentaire de réparation.

Le caisson de hayon peut également comprendre l'une ou plusieurs des caractéristiques de la liste suivante :
- le caisson comprenant une ouverture apte à accueillir une vitre, et une partie supérieure agencée de façon à se trouver plus haut que l'ouverture lorsque le caisson est monté sur le véhicule, le logement est situé dans la partie supérieure. A cet emplacement, le coussin gonflable est idéalement placé pour protéger la tête d'un passager arrière du véhicule,
- le logement comprend un fond et au moins une paroi latérale, le fond étant orienté essentiellement vers le bas lorsque le caisson est monté sur le véhicule. Cela permet de faciliter le contrôle du déploiement du coussin, celui-ci se déployant vers le bas, et de protéger au mieux la tête du piéton, le déploiement du coussin ne projetant pas la tête du piéton vers l'avant s'il se déclenche à mauvais escient,
- le caisson est réalisé à base de matière plastique. Il peut par exemple être réalisé en matière thermoplastique, tel que le polypropylène (PP), le polyamide (PA) ou le polyéthylène (PE). Il peut également être réalisé en matériau thermodurcissable tel que le SMC (Sheet Moulding Compound), le BMC (Bulk Moulding Compound) ou l'AMC (Advanced Moulding Compound). Un tel caisson est de préférence renforcé de fibres, tel que des fibres de verre ou de carbone, et/ou surmoulé à l'aide d'éléments métalliques. Ces renforts permettent au caisson en matière plastique de se conformer au cahier des charges en vigueur chez les constructeurs en matière de tenue mécanique du hayon,

L'invention a également pour objet un hayon comprenant un caisson selon l'invention et un coussin gonflable de sécurité.

Un tel hayon peut également comprendre l'une ou plusieurs des caractéristiques de la liste suivante :
- le hayon comprend un panneau d'habillage intérieur agencé sur la surface interne du caisson et recouvrant le logement, le panneau étant configuré pour être traversé par le coussin gonflable de sécurité lors du déploiement de ce dernier. Ainsi, l'esthétique de l'intérieur n'est pas impactée par la présence du coussin gonflable dans le hayon,
- en particulier, le panneau d'habillage intérieur comprend une trappe agencée de façon à recouvrir le logement, la trappe comprenant à au moins une extrémité des moyens de fixation amovible, par exemple par encliquetage, au reste du panneau. Ainsi, la trappe s'ouvre sous la pression engendrée par le déploiement du coussin et peut être refermée par la suite sans endommager le panneau d'habillage. Une telle trappe permet donc de ne pas avoir à changer ce panneau après le déploiement du coussin de sécurité,
- en variante, le panneau d'habillage intérieur peut également comprendre une zone fusible, notamment une zone de moindre épaisseur ou une zone comprenant au moins une fente, agencée de façon à recouvrir le logement, la zone fusible étant apte à se rompre lors du déploiement du coussin gonflable de sécurité,
- le hayon comprend en outre un éclairage pour l'habitacle du véhicule agencé sur la surface interne du caisson. Ainsi, on profite du fait que l'on doit alimenter le système de sécurité (notamment du fait du système de mise à feu du coussin) pour utiliser le hayon comme support d'éclairages pour l'habitacle du véhicule.

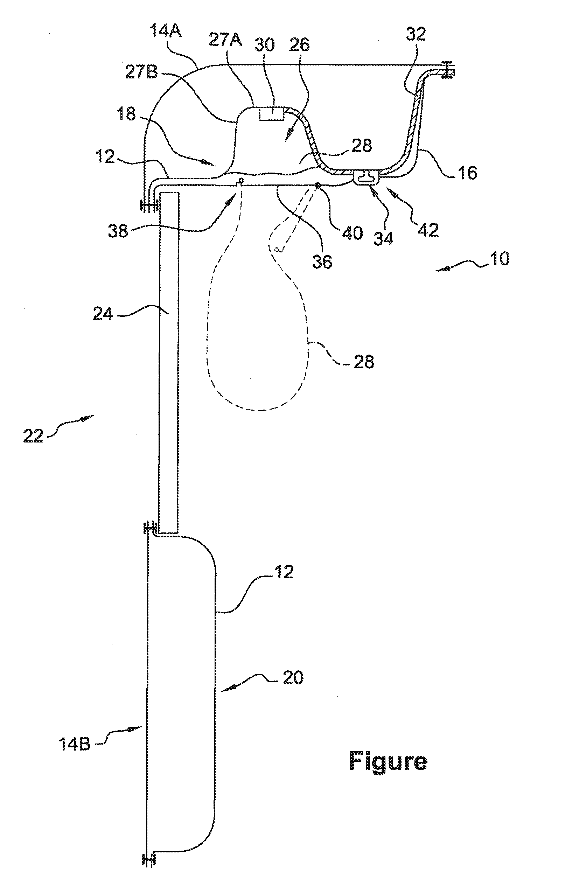

L'invention sera mieux comprise à la lecture de la description qui va suivre, donnée uniquement à titre d'exemple et faite en se référant à la figure unique représentant une vue en coupe d'un hayon de véhicule selon un mode de réalisation de l'invention.

On a représenté sur les figures un hayon de véhicule 10. Le hayon comprend un caisson 12 recouvert, sur la partie du hayon destinée à être tournée vers l'extérieur du véhicule, par des panneaux de carrosserie 14A, 14B et, sur la partie destinée à être tournée vers l'intérieur du véhicule, par un panneau d'habillage intérieur du véhicule 16.

Le caisson présente plus particulièrement une partie supérieure 18 et une partie inférieure 20, séparées par une ouverture 22 destinée à accueillir une vitre 24. Les parties supérieure et inférieure 18, 20 sont reliées par des montants placés de chaque côté de l'ouverture et non représentés sur la figure.

Le caisson est réalisé en matériau thermodurcissable tel que le SMC. Les pièces de carrosserie 14A, 14B sont réalisées en matériau thermoplastique tel que du polypropylène et la pièce d'habillage intérieur 16 est également réalisée en un matériau thermoplastique, tel que le polypropylène, recouvert de tissu.

Dans sa partie supérieure, le caisson 12 comprend un logement 26 tourné vers l'intérieur du véhicule, délimité par la surface interne de la paroi du caisson, surface destinée à être tournée vers l'intérieur du véhicule lorsque le caisson est monté sur le véhicule. Le logement comprend un fond 27A orienté vers le bas lorsque le caisson est monté sur le véhicule et une paroi latérale 27B. Le logement 26 est dimensionné de façon à pouvoir contenir un coussin gonflable lorsque celui-ci est en état de repos, c'est à dire lorsqu'il n'est pas rempli d'air.

Un coussin gonflable de sécurité 28 est agencé dans le logement 26 avec son système de mise à feu 30 permettant le déploiement du coussin 28 suite à la détection d'un choc arrière. Un câble 32 reliant le système de mise à feu 30 au système d'alimentation central du véhicule est également agencé sur le caisson 12, et s'étend plus particulièrement sur la surface intérieure du caisson 12. Ce câble 32 est guidé vers la caisse en passant par la zone de liaison du hayon et de la caisse, ici la zone des charnières située à l'extrémité supérieure du hayon.

Le caisson est également muni de moyens d'éclairage 34 de l'habitacle du véhicule agencés sur la surface interne du caisson 12. Ces moyens comprennent en particulier une ampoule et une vitre de protection et sont alimentés par le câble 32.

Le panneau d'habillage intérieur 16 recouvre le logement 26. Il comprend plus particulièrement dans la zone recouvrant ce logement 26 une trappe 36 ouverte sur trois côtés et comprenant sur un de ses trois côtés des moyens de fixation amovible 38 au reste du panneau 16. Ces moyens de fixation 38 comprennent par exemple une languette élastique destinée à être insérée dans un orifice prévu à cet effet d'une autre languette, comme cela est représenté sur la figure. Sur son côté opposé à celui comprenant les moyens de fixation, la trappe 36 comprend également des moyens de pivotement relativement au reste du panneau, ces moyens pouvant être réalisés à l'aide d'un simple film-charnière.

Le panneau d'habillage peut également comprendre une ouverture 42 permettant d'accueillir les moyens d'éclairage de l'habitacle.

Ainsi, le hayon de véhicule est muni d'un moyen d'assurer la sécurité des passagers arrières du véhicule en cas de choc arrière. Lorsqu'un capteur d'accélération placé sur la caisse détecte qu'un tel choc a lieu un signal électrique est transmis au véhicule. Le véhicule commande alors l'actionnement du coussin gonflable, grâce à la transmission d'un signal électrique vers le système de mise à feu du coussin, par l'intermédiaire du câble 32.

Le coussin 28 se déploie alors en se remplissant d'air comme cela a été représenté en pointillés sur la figure. Sous la pression du coussin 28, les languettes élastiques se déforment, les moyens de fixation se désactivent et la trappe 36 s'ouvre et pivote comme cela est également représenté en pointillés sur la figure, le coussin gonflable protégeant ainsi de manière efficace la tête des passagers arrières du véhicule en cas de choc.

L'invention n'est bien entendu pas limitée au mode de réalisation précédemment décrit. Le hayon peut évidemment comprendre plusieurs logements et plusieurs coussins.

Le caisson, les pièces de carrosserie et d'habillage intérieur du véhicule ne présentent pas forcément les formes représentées et peuvent être réalisées en d'autres matériaux que ceux décrits précédemment. Le caisson peut par exemple être réalisé en un matériau thermoplastique tel que le polypropylène renforcé de fibres,

Le caisson peut également être recouvert d'une pièce d'habillage intérieure dans sa partie inférieure.

En outre, le logement peut être placé différemment sur le caisson et être de dimensions différentes, tant qu'il peut accueillir le coussin gonflable en état de repos. Le logement peut également comprendre d'autres éléments que ceux décrits. Il peut être également orienté différemment, tant qu'il permet de protéger la tête des passagers arrières du véhicule en cas de choc arrière, en évitant l'impact de la tête sur la vitre arrière.

De plus, la trappe peut être agencée différemment que ce qui a été représenté. Elle peut par exemple s'ouvrir en pivotant vers l'arrière du véhicule. Le panneau d'habillage intérieur peut également ne pas comprendre de trappe 36. Il pourrait tout simplement être réalisé en un matériau se déchirant sous la pression exercée par le déploiement du coussin gonflable. Il pourrait également comprendre une zone fusible de moindre épaisseur que le reste de la pièce d'habillage.

Les moyens de fixation amovible de la trappe, si elle est ménagée dans le panneau d'habillage du hayon, peuvent également être de nature différente de ce qui a été décrit.

En outre, certains des éléments décrits sont optionnels. La pièce d'habillage intérieure pourrait par exemple comprendre une ouverture en face du logement ou le hayon pourrait être dépourvu de moyens d'éclairage.

## Revendications

1. Caisson de hayon (12) de véhicule, qui comprend une paroi ayant une surface interne prévue pour être tournée vers l'intérieur du véhicule lorsque le caisson est monté sur le véhicule, un logement (26) dimensionné pour accueillir un coussin gonflable de sécurité (28) étant ménagé dans le caisson, le logement étant délimité par la surface interne du caisson, **caractérisé en ce que** le caisson comprend une ouverture (22) apte à accueillir une vitre (24), et une partie supérieure (18) agencée de façon à se trouver plus haut que l'ouverture lorsque le caisson est monté sur le véhicule, le logement (26) étant situé dans la partie supérieure.

2. Caisson selon la revendication précédente, dans lequel le logement (26) comprend un fond (27A) et au moins une paroi latérale (27B), le fond étant orienté vers le bas lorsque le caisson est monté sur le véhicule.

3. Caisson selon l'une quelconque des revendications précédentes, réalisé à base de matière plastique.

4. Hayon (10) de véhicule comprenant un caisson (12) selon l'une quelconque des revendications précédentes, et un coussin gonflable de sécurité (28) agencé dans le logement (26).

5. Hayon selon la revendication précédente, comprenant un panneau d'habillage intérieur (16) agencé sur la surface interne du caisson et recouvrant le logement (26), le panneau étant configuré pour être traversé par le coussin gonflable de sécurité (28) lors du déploiement de ce dernier.

6. Hayon selon la revendication précédente, dans lequel le panneau d'habillage intérieur (16) comprend une trappe (26) agencée de façon à recouvrir le logement (26), comprenant à au moins une extrémité des moyens de fixation amovible (38), par exemple par encliquetage, au reste du panneau.

7. Hayon selon la revendication 6, dans lequel le panneau d'habillage intérieur comprend une zone fusible, notamment une zone de moindre épaisseur ou une zone comprenant au moins une fente, agencée de façon à recouvrir le logement, la zone fusible étant apte à se rompre lors du déploiement du coussin gonflable de sécurité.

8. Hayon selon l'une des revendications 4-7, comprenant en outre un éclairage (34) pour l'habitacle du véhicule agencé sur la surface interne du caisson (12).

## Patentansprüche

1. Fahrzeug-Heckklappenkasten(12), der eine Wand aufweist, die eine innere Fläche aufweist, die dafür vorgesehen ist, zu dem Inneren des Fahrzeugs hin gedreht zu werden, wenn der Kasten an dem Fahrzeug montiert ist, wobei ein Sitz (26), der für die Aufnahme eines Airbags (28) dimensioniert ist, in dem Kasten eingerichtet ist, wobei der Sitz durch die innere Fläche des Kasten begrenzt wird, **dadurch gekennzeichnet, dass** der Kasten eine Öffnung (22), die für die Aufnahme einer Scheibe (24) geeignet ist, und einen oberen Teil (18) aufweist, der derart angeordnet ist, dass er sich höher befindet als die Öffnung, wenn der Kasten an dem Fahrzeug montiert ist, wobei der Sitz (26) sich in dem oberen Teil befindet.

2. Kasten nach dem vorhergehenden Anspruch, wobei der Sitz (26) einen Boden (27A) und mindestens eine seitliche Wand (27B) aufweist, wobei der Boden nach unten ausgerichtet ist, wenn der Kasten an dem Fahrzeug montiert ist.

3. Kasten nach einem der vorhergehenden Ansprüche, der auf der Basis von Kunststoff realisiert ist.

4. Fahrzeug-Heckklappe (10), aufweisend einen Kasten (12) nach einem der vorhergehenden Ansprüche, und einen Airbag (28), der in der Aufnahme (26) angeordnet ist.

5. Heckklappe nach dem vorhergehenden Anspruch, aufweisend eine Innenverkleidungsplatte (16), die an der inneren Fläche des Kastens angeordnet ist und den Sitz (26) abdeckt, wobei die Platte eingerichtet ist, um durch den Airbag (28) beim Entfalten dieses letzten durchquert zu werden.

6. Heckklappe nach dem vorhergehenden Anspruch, wobei die Innenverkleidungsplatte (16) eine Klappe (26) aufweist, die derart angeordnet ist, dass sie die Aufnahme (26) abdeckt, umfassend an mindestens einem Ende Mittel zum entfernbaren Befestigen (38), zum Beispiel durch Einrasten, an der übrigen Platte.

7. Heckklappe nach Anspruch 6, wobei die Innenverkleidungsplatte eine schmelzbare Zone aufweist, insbesondere eine Zone mit geringerer Dicke oder eine Zone, die mindestens einen Schlitz aufweist, die derart angeordnet ist, dass sie den Sitz abdeckt, wobei die schmelzbare Zone dafür geeignet ist, beim Entfalten des Airbags zu brechen.

8. Heckklappe nach einem der Ansprüche 4 bis 7, aufweisend ferner eine Beleuchtung (34) für den Fahrgastinnenraum des Fahrzeugs, die an der inneren Fläche des Kasten (12) angeordnet ist.

## Claims

1. A vehicle tailgate box (12) including a wall having an inside surface designed to face towards the inside of the vehicle when the box is mounted on the vehicle, a housing (26) dimensioned to receive an airbag (28) being arranged in the box, the housing being defined by the inside surface of the box, the box being **characterized in that** it has an opening (22) suitable for receiving a window (24), and a top portion (18) arranged to be higher than the opening when the box is mounted on the vehicle, the housing (26) being situated in the top portion.

2. A box according to the preceding claim, wherein the housing (26) has a far wall (27A) and at least one side wall (27B), the far wall facing downwards when the box is mounted on the vehicle.

3. A box according to either preceding claim, made on the basis of plastics material.

4. A vehicle tailgate (10) comprising a box (12) according to any preceding claim, and an airbag (28) arranged in the housing (26).

5. A tailgate according to the preceding claim, including an inside trim panel (16) arranged on the inside surface of the box and covering the housing (26), the panel being configured for the airbag (28) to pass through it on deployment of the airbag.

6. A tailgate according to the preceding claim, wherein the inside trim panel (16) includes a hatch (26) arranged so as to cover the housing (26), the hatch including, at at least one end, releasable fastener means (38) for fastening to the remainder of the panel, e.g. by snap fastening.

7. A tailgate according to claim 6, wherein the inside trim panel has a breakable zone, in particular a zone of reduced thickness or a zone including at least one groove, and arranged to cover the housing, the breakable zone being suitable for breaking during deployment of the airbag.

8. A tailgate according to any one of claims 4 to 7, further including a light (34) for lighting the vehicle cabin and arranged on the inside surface of the box (12).
